# EUROPEAN PATENT APPLICATION

(11) **EP 3 842 652 A1**
(43) Date of publication of application: **30.06.2021**
(21) Application number: 19852851.5
(22) Date of filing: 22.08.2019
(51) Int. Cl.: F16D 1/00, F24F 13/02, F16L 21/06

(54) **RING FOR A TORSIONALLY ELASTIC FLEXIBLE COUPLING**

(30) Priority: 22.08.2018 BR 202018017256 U
(71) Applicant: Vulkan Do Brasil Ltda, 13252-200 Itatiba (BR)
(72) Inventor: LACERDA LEAL, Josias, 13253-020 Itatiba (BR); MINGOTI MORAES, Marcel, 13218-880 Jundiaí (BR)
(74) Representative: Plasseraud IP
(86) International application number: PCT/BR2019/050347
(87) International publication number: WO 2020/037389

(57) **Abstract**

The present utility model relates to a ring for a torsionally elastic flexible coupling of the type comprising coupling elements (2, 3) with claws and elastic elements (4) arranged radially between the claws, the ring comprising a two-part body formed by a first body part (51) and a second body part (52) that are joined together, each of the first and second body parts (5 1, 52) having an internal surface with a channel (51c, 52c), the channels (51, 52) of each body part forming a continuous annular channel designed to fit into one of the coupling elements (2, 3) of the coupling.

## Description

The present utility model refers to a retaining ring for a torsionally elastic flexible coupling of the type comprising coupling elements with claws and elastic elements arranged radially between the claws.

### FUNDAMENTALS OF THE UTILITY MODEL

Flexible couplings are well known in the state of the art and act to join two shafts in an aligned and precise way.

Torsionally elastic flexible couplings allow joining two shaft faces, accommodating the radial, axial, and angular misalignments that occur in each assembly.

Generally, a torsionally elastic flexible coupling comprises coupling elements with claws with elastic elements arranged radially between the claws. The coupling elements may be in the form of hubs with claws or include flanges with claws. They are the elastic elements that assist in the absorption of shocks and vibrations coming from the machines whose axes are joined (that is, the driving machine or the driven machine).

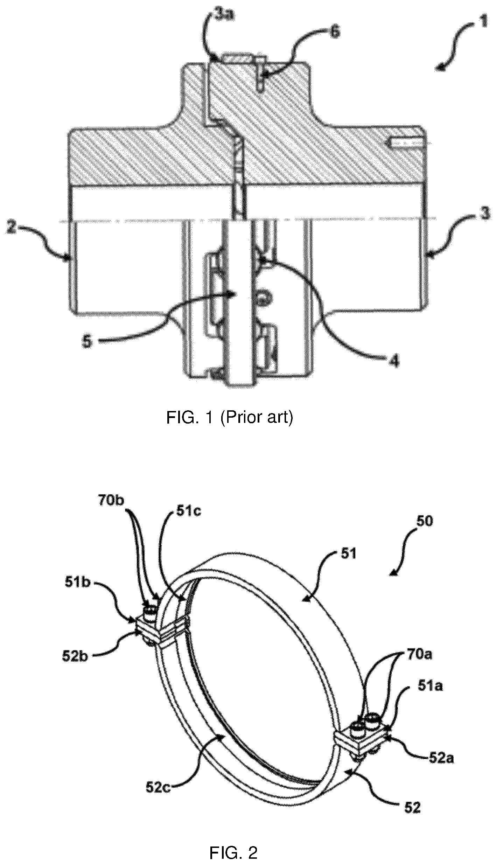

Figure 1 shows an exemplary embodiment of a torsionally elastic flexible coupling known from the prior art, with a partial cross section shown.

As can be seen in this figure, the coupling 1 has two coupling elements with claws 2, 3. Elastic elements 4 are arranged between the claws. The elastic elements are held in place by an external retaining ring 5 attached to the coupling element 3 with the aid of at least three screws 6. Thus, the ring 5 is fixed between the screws 6 and a shoulder 3a formed near the end of the coupling element 3.

The screws 6 and the shoulder 3a act as axial stops in order to prevent axial displacement of the ring 5.

For the installation of the ring 5, it enters through the outer end of the coupling element and is axially slid until it rests against the shoulder 3a, and then the screws 6 are fixed on the coupling element 3 to prevent axial displacement in the opposite direction. Thus, when installing the ring 5, the same must be placed on the coupling element 3 before connecting the shaft.

When it is necessary to remove the ring 5, for example, in the case of maintenance or in other situations where it is necessary to replace or remove any of the elastic elements, the screws 6 must be removed and the ring 5 must be slid axially through the coupling element. Naturally, for removing the ring from the complete coupling, it is necessary to decouple and disassemble the shaft.

Thus, the need for a retaining ring solution that allows torsionally elastic flexible coupling for easy and practical maintenance remains in the state of the art.

### BRIEF DESCRIPTION OF THE UTILITY MODEL

The present utility model achieves the above objectives through a ring for a torsionally elastic flexible coupling of the type comprising coupling elements with claws and elastic elements arranged radially between the claws, the ring being configured to hold the elastic elements in place and comprising a two-part body formed by a first body part and a second body part joinable together, each of the first and second body parts having an internal surface with a channel, the channels of each body part forming an annular channel dimensioned to fit one of the claw elements of the coupling.

Each of the ends of the first and second body parts has a flap, so that, for the joining of the body parts, corresponding flaps of each body part are joined with screws and fastening nuts.

The channels are dimensioned to receive an outer edge of the coupling element.

### BRIEF DESCRIPTION OF THE DRAWINGS

The present utility model will be described in more detail below, with references to the attached drawings, in which:
Figure 1 - is a partial cross-sectional view of a torsionally elastic flexible coupling known from the state of the art;
Figure 2 - is a rear perspective view of the torsionally elastic flexible coupling ring object of the present utility model;
Figure 3 - is a front view of the torsionally elastic flexible coupling ring object of the present utility model;
Figure 4 - is a cross-sectional view of one of the body parts of the torsionally elastic flexible coupling ring object of the present utility model; and
Figure 5 - is a schematic illustration in detail of the fixation of the ring object of the present utility model in a torsionally elastic flexible coupling.

### DETAILED DESCRIPTION OF THE UTILITY MODEL

The present utility model will be described below based on figures 2 to 5 attached.

The coupling that receives the ring object of the present model has the same construction as the torsionally flexible elastic coupling illustrated in figure 1, except for the ring itself and the need of a screw 6.

In the present utility model, the coupling retaining ring is constructed as shown in figures 2 to 5.

Thus, ring 50 has a two-part body formed by a first body part 51 and a second body part 52, the first and second body parts being joinable together by removable fastening means.

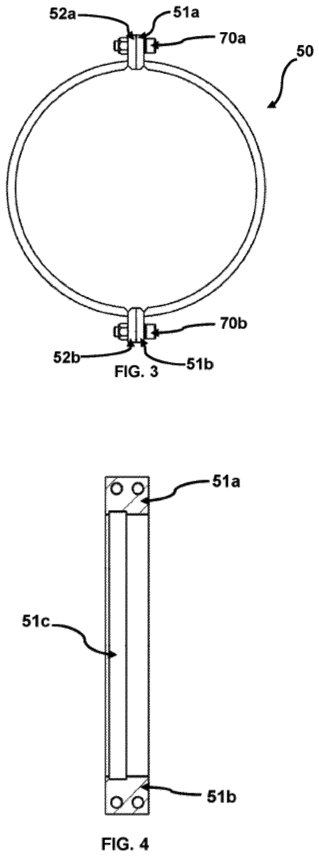

As shown in figures 2 and 3, each of the ends of the first and second body parts 51, 52 has a flap 51a, 51b and 52a, 52b, so that, for joining the two-part bodies, the corresponding flaps of each body part 51a, 52a and 51b, 52b are joined with screws and fastening nuts 70a and 70b.

As best illustrated in figures 2 and 4, the inner surface of each of the body parts 51, 52 has a channel 51c, 52c. Thus, when the body parts are joined, channels 51c and 52c of the formal body parts are a continuous annular channel on the inner surface of the ring.

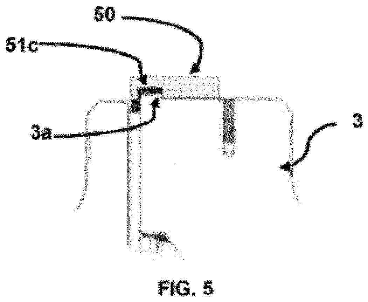

Figure 5 shows the operation of the ring 50 on the torsionally elastic flexible coupling. As shown in this figure, channels 51c, 52c are used to maintain the axial position of ring 50.

As shown in this figure, the channels 51c, 52c are dimensioned to fit the coupling element 3.

In this sense, it is highlighted that although the figures illustrate the coupling element as a hub 3, the coupling element could still be an element that uses flanges with claws, as known to those skilled in the art.

Thus, as shown in the figure, the channels 51c, 52c are dimensioned to receive the outer edge of the coupling element 3, that is, the portion of the outer surface of the coupling element between the shoulder 3a and the end of the coupling element 3.

As is clear from the description above and from the figures, the coupling of the present utility model, with the described retaining ring, represents a significant functional improvement in relation to the couplings known from the prior art, mainly with regard to the installation and removal of the ring.

In this sense, the proposed construction allows the ring to be installed and removed in an easy, practical, and simple way, without the need to uncouple and disassemble the shafts.

In addition, fitting the channels on the inner surface of the coupling element eliminates the need for using screws 6, since axial positioning is guaranteed.

In addition, the shape of the channels 51c, 52c adapts perfectly to the body of the coupling elements of the prior art, so that the ring can be used in couplings normally used with the conventional ring.

Having described an example of the present utility model, it should be understood that the scope of the present utility model covers other possible constructive variants, being limited only by the content of the claims, including the possible equivalents.

## Claims

1. Ring for a torsionally elastic flexible coupling of the type comprising coupling elements (2,3) with claws and elastic elements (4) arranged radially between the claws, the ring being configured to hold the elastic elements (4) in place and being **characterized in that** it comprises a two-part body formed by a first body part (51) and a second body part (52) connected together, each of the first and second body parts (51, 52) having an internal surface with a channel (51c, 52c), the channels (51c, 52c) of each body part forming a continuous annular channel dimensioned to fit in one of the coupling elements (2,3) of the coupling.

2. Ring, according to claim 1, **characterized in that** each of the ends of the first and second body parts (51, 52) has a flap (51a, 51b; 52a, 52b), so that, for uniting the body parts, the corresponding flaps of each body part (51a, 52a and 51b, 52b) are joined with screws and fixing nuts (70a, 70b).

3. Ring, according to claim 2, **characterized in that** the channels (51c, 52c) are dimensioned to receive an outer edge of the coupling element (3).
